# EUROPÄISCHE PATENTSCHRIFT

(11) **EP 3 631 925 B1**
(45) Veröffentlichungstag und Bekanntmachung des Hinweises auf die Patenterteilung: **15.09.2021**
(21) Anmeldenummer: 18726967.5
(22) Anmeldetag: 22.05.2018
(51) Int. Cl.: H02B 1/28

(54) **EXPLOSIONSSICHERES GEHÄUSE MIT INNERER DRUCKENTLASTUNG**
EXPLOSION-PROOF HOUSING WITH INNER PRESSURE RELIEF
BOÎTIER ANTIDÉFLAGRATION COMPRENANT UN SYSTÈME DE DÉCOMPRESSION INTÉRIEUR

(30) Priorität: 01.06.2017 DE 102017112159
(43) Veröffentlichungstag der Anmeldung: 08.04.2020
(73) Patentinhaber: R. Stahl Schaltgeräte GmbH, 74638 Waldenburg (DE)
(72) Erfinder: ARNHOLD, Thorsten, 74629 Pfedelbach (DE); HERMANOWSKI, Clife, 74743 Seckach (DE)
(74) Vertreter: Rüger Abel Patentanwälte PartGmbB
(86) Internationale Anmeldenummer: PCT/EP2018/063341
(87) Internationale Veröffentlichungsnummer: WO 2018/219713

(56) Entgegenhaltungen:
- DE-A1- 2 915 504
- DE-U1- 9 103 892
- US-A1- 2011 292 575
- US-A1- 2013 135 832

## Beschreibung

Gegenstand der Erfindung ist ein explosionsgeschütztes Gehäuse, insbesondere ein Gehäuse der Schutzart Ex-d.

Gehäuse der Schutzart Ex-d werden häufig in explosionsgefährdeten Bereichen eingesetzt. Solche Gehäuse sind so dickwandig ausgebildet, dass sie einer im Gehäuseinneren stattfindenden Zündung eines explosionssicheren Gasgemisches und der darauf folgenden Druckerhöhung standhalten. Außerdem sind die Gehäuse so gestaltet, dass keine Flammen oder glühende, als Zündquellen wirkende Partikel nach außen gelangen können. Sollten Spalte vorhanden sein, müssen diese eine Mindestlänge aufweisen und dürfen eine Höchstweite nicht überschreiten. Außerdem sind Gehäuseöffnungen mit Druckentlastungskörpern versehen, die auch als Flammenschutzfilter bezeichnet werden und verhindern, dass eine im Gehäuse gezündete Explosion nach außen dringt und in der Umgebung vorhandenes explosionsfähiges Gemisch zündet.

Ein Beispiel für ein explosionsgeschütztes Gehäuse ist der **DD** 261 063 A3 zu entnehmen. Das dort veranschaulichte Gehäuse weist in seinem Innenraum einen porösen Körper beispielsweise aus Schlackenwolle, Glaswolle oder Metall oder Keramik mit offenen durchgehenden Poren oder Spalten auf. Dieser Körper soll zu einer Senkung des Explosionsdrucks um ca. 90% führen.

Ebenso offenbart die DE 198 60 386 B4 ein für einen Bildschirm vorgesehenes Gehäuse, dessen Innenraum teilweise mit einem porösen Explosionsdruck-Dämpfungsmaterial gefüllt ist. Dieses weist eine Vielzahl im Querschnitt kleiner, nicht geschlossener, sondern durchgehender Kanäle in Form von Poren und/oder Spalten auf. Der Explosionsdruck soll auf lediglich etwa 10% des Explosionsdrucks gedämpft werden, der sonst in dem leeren Gehäuse auftreten würde.

Die insoweit vorgestellten Gehäuselösungen erfordern zur Senkung des Explosionsdrucks Dämpfungskörper mit erheblichem Volumen, womit der Gehäuseinnenraum nur unzulänglich ausgenutzt wird.

Aus der DE 10 2013 109 259 A1 ist dagegen ein explosionsgeschütztes Gehäuse der Schutzart "druckfeste Kapselung" (Ex-d) bekannt, in dessen Gehäusewand ein poröser Druckentlastungskörper vorgesehen ist, durch den ein im Gehäuse aufgebauter Explosionsdruck nach außen dringen kann. Ein ähnliches Prinzip nutzen die Gehäuse nach der US 4,180,177 sowie nach der DE 10 2010 016 782 B4**.**

Außerdem ist aus der DE 1 790 184 A1 ein vorteilhafter Aufbau eines Hochspannungsschaltschranks bekannt. Dieser enthält mehrere voneinander getrennte Kammern, ist jedoch nicht für den Einsatz in explosionsgefährdeter Umgebung eingerichtet.

Für den Einsatz in explosionsgefährdeter Umgebung ist aus der DE 1801062 C ein Stahlblechgehäuse für explosionsgefährdete Umgebung bekannt, dessen Gehäusewände aus Stahlblech bestehen und hinsichtlich ihrer Nachgiebigkeit so bemessen sind, dass sie bei einer im Inneren stattfindenden Explosion plastisch verformt und dabei gereckt werden. Mindestens eine entsprechende Explosion wird im Rahmen der Fertigung eines solchen Gehäuses herbeigeführt, wodurch das Gehäuse erst seine gewünschte Form erhält. Die durch die Explosion(en) herbeigeführte Wölbung der Wände nach außen soll die Gestaltfestigkeit des Gehäuses verbessern.

Als Transformatorhäuschen für starkstromtechnische Einrichtungen beschreibt die DE 29 15 504 A1 ein Gebäude mit gegossenem Fundament und einem Innenraum, der einen Boden aufweist. Der Boden trennt im unteren Bereich des Gebäudes einen Teilzuluftkanal ab, der über eine Druckentlastungsöffnung mit einem Belüftungskanal in Verbindung steht.

Die US 2011/0292575 A1 beschreibt dagegen einen Schaltschrank mit Druckentlastungsöffnungen und Funkensperren. An der Rückwand ist eine Schutzanordnung vorgesehen, die zwei Druckentlastungskörper aufweist, die in Strömungsrichtung hintereinander angeordnet sind. Zwischen den Druckentlastungskörpern verbleibt ein Raum.

Es ist Aufgabe der Erfindung, ein Konzept für ein leichtes explosionsgeschütztes Gehäuse mit verbesserter Widerstandsfähigkeit gegen im Inneren stattfindende Explosionen anzugeben.

Diese Aufgabe wird mit der explosionsgeschützten Gehäuseanordnung nach Anspruch 1 gelöst:

Die erfindungsgemäße Gehäuseanordnung weist ein Gehäuse auf, das einen Innenraum umschließt, der zur Aufnahme von Komponenten geeignet ist, die Zündquellen bilden können. Das Gehäuse weist wenigstens eine Gehäusewand auf, in der wenigstens ein innerer Hohlraum vorgesehen ist. Der innere Hohlraum steht mit dem Innenraum in Strömungsverbindung. Gegen die Umgebung kann der Hohlraum abgeschlossen sein. In dem Hohlraum sind vorzugsweise keine Komponenten angeordnet, die Zündquellen bilden könnten.

Durch die Ausbildung innerer Hohlräume in der Gehäusewand erhält diese eine hohe Gestaltfestigkeit bei geringem Gewicht. Außerdem wirken die Wandflächen jedes Hohlraums wärmeaufnehmend, so dass der Hohlraum zum Abbau von Druckspitzen und deswegen zu einer verminderten mechanischen Belastung der Gehäusewand beiträgt. Die Gehäuseanordnung kann insbesondere als Gehäuse der Schutzart ex-d ("Druckfeste Kapselung") ausgebildet sein. In dem Innenraum angeordnete Komponenten, können Zündquellen für ein explosionsfähiges Gasgemisch bilden, dessen Explosion von dem Gehäuse so eingeschlossen bleibt, dass weder Flammen noch heiße, ihrerseits Zündquellen bildende Partikel aus dem Gehäuse heraus gelangen. Dazu sind alle Öffnungen und Spalte, die den Innenraum des Gehäuses mit der Umgebung verbinden so eng und lang, dass der Austritt von Flammen oder heißen Partikeln sicher ausgeschlossen ist.

Der Hohlraum ist über eine oder mehrere Durchgangsöffnungen mit dem Innenraum verbunden. Der Hohlraum wirkt dabei als Kühl- und Druckentlastungsvolumen, wodurch die Druckspitze bei einer Explosion im Innenraum gemildert wird. Der Hohlraum hat vorzugsweise ein größeres Oberflächen/Volumen-Verhältnis als der Innenraum, so dass eindringende Gase besser gekühlt werden als im Innenraum.

In der Durchgangsöffnung kann ein Druckentlastungskörper angeordnet sein. Dieser weist enge Poren und/oder Spalten auf, die einen Flammendurchschlag verhindern. Dies verhindert die Zündung von bereits im Hohlraum befindlichem Gas, was die Explosion schwächt und die Druckspitze weiter vermindert. Außerdem entzieht ein solcher Druckentlastungskörper durchströmendem Gas Wärme und kühlt dieses gegebenenfalls zusätzlich durch Expansion, z.B. infolge des Jule-Thompson-Effekts und/oder durch adiabatische Expansion und/oder durch sein Wärmeaufnahmevermögen. Diese Effekte tragen zur Volumenverminderung bei.

Der Druckentlastungskörper kann ein Drahtnetz-Sinterkörper, ein anderweitiger Sinterkörper, metallischer oder keramischer Schaum oder dergleichen sein.

Die Gehäusewand weist vorzugsweise eine dem Innenraum zugewandte Innenwand und eine das Gehäuse nach außen abgrenzende Außenwand auf, zwischen denen ein oder mehrere Hohlräume ausgebildet sind, wodurch eine hohe Gestaltsteifigkeit des Gehäuses bei geringem Materialaufwand und Gewicht erreicht wird.

Die Gestaltsteifigkeit wird noch erhöht, wenn die Innenwand und/oder die Außenwand gerippt ausgebildet sind. Die Innenwand und die Außenwand können an den Rippen z.B. durch Schweißnähte untereinander verbunden sein.

Die Gehäusewand kann zwei- oder mehrschalig aufgebaut sein. Mehrere in der Gehäusewand vorgesehene Hohlräume können untereinander durch Öffnungen verbunden sein, um einen Druckausgleich zwischen den Hohlräumen zu bewirken. Dadurch können insbesondere lokale Belastungen infolge außermittiger Zündung oder einseitige Abschattung der Explosionsdruckwelle gemildert werden.

Das Gehäuse kann Öffnungen zur umgebenden Atmosphäre aufweisen. Vorzugsweise sind diese gegen Flammendurchschlag und austritt heißer oder glühender Partikel sicher, indem Spaltweiten und Spaltlängen innerhalb der Explosionsschutznormen ausgebildet sind.

In oder an (je)dem Hohlraum kann ein Dämpfungskörper angeordnet sein, der den Hohlraum ganz oder teilweise ausfüllt. Der Dämpfungskörper besteht vorzugsweise aus einem unbrennbaren Material mit großer innerer Oberfläche, wie z.B. Metallwolle, Glaswolle, Steinwolle oder dergleichen. Vorzugsweise ist (je)der Hohlraum jedoch frei von raumgreifenden Einbauten, Komponenten, Dämpfungselementen und dergleichen. Er ist vorzugsweise leer.

Weitere Einzelheiten vorteilhafter Ausführungsformen der Erfindung sind Gegenstand von Ansprüchen, der Zeichnung oder der Beschreibung. Es zeigen:

Figur 1 ein explosionsgeschütztes Gehäuse mit Hohlräumen zur Druckentlastung, nicht Teil der Erfindung, in schematisierter Schnittdarstellung, Figur 2, ein explosionsgeschütztes Gehäuse, Teil der Erfindung,

Figur 3 und 4 weitere Beispiele explosionsgeschützter Gehäuse mit Hohlräumen zur Druckentlastung, nicht Teil der Erfindung, in schematisierter Schnittdarstellung.

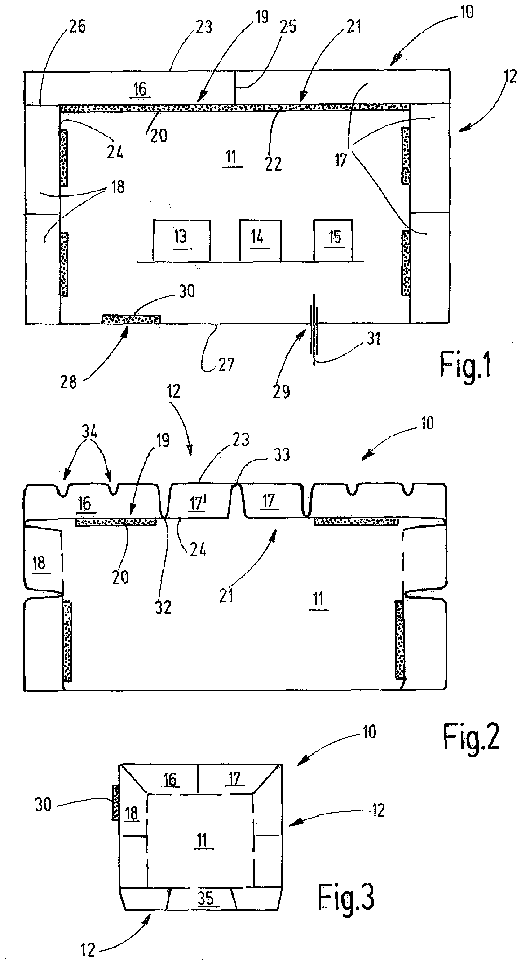

In Figur 1 ist ein Gehäuse 10 veranschaulicht, das als explosionsgeschütztes Gehäuse ausgebildet ist. Das Gehäuse 10 umschließt einen Innenraum 11 mit einer Gehäusewand 12 allseitig. In dem Innenraum 11 des Gehäuses 10 sind Komponenten 13, 14, 15, beispielsweise elektrische Bauelemente, angeordnet, die durch Erwärmung, Funkenbildung, Bewegung oder dergleichen, Zündquellen für ein in den Innenraum 11 eingedrungenes explosives Gasgemisch bilden können. Das Gehäuse 10 ist so ausgebildet, dass eine in dem Innenraum 11 stattfindende Explosion das Gehäuse nicht beschädigen kann. Außerdem verhindert das Gehäuse 10 den Austritt von Flammen und/oder heißen, insbesondere glühenden Partikeln, die Zündquellen für ein in der Umgebung befindliches explosives Gasgemisch bilden könnten.

Die Gehäusewand 12 weist an einer oder mehreren Seiten des Gehäuses 10 wenigstens einen Hohlraum 16, vorzugsweise mehrere Hohlräume 16, 17, 18 auf, die frei von Zündquellen bildenden Komponenten sind. Diese leeren Hohlräume 16, 17, 18 bilden Schluckräume für eine aus dem Innenraum 11 kommende Druckwelle und sie tragen zugleich zur Gestaltfestigkeit, d.h. zur Erhöhung der Steifigkeit und Belastbarkeit der Gehäusewand 12 bei.

Der Hohlraum 16 und der Innenraum 11 sind durch eine Durchgangsöffnung 19 miteinander verbunden in oder an der vorzugsweise ein Druckentlastungskörper 20 angeordnet ist. Der Druckentlastungskörper 20 ist vorzugsweise ein poröser Körper, beispielsweise bestehend aus mehreren Drahtnetzlagen, die miteinander durch Sinterung zu einem festen Körper verbunden sind. Alternativ kann der Körper 20 aus Metallpartikeln, insbesondere Metallkugeln, Keramikkugeln oder dergleichen, durch Sinterung erzeugt worden sein. Der Druckentlastungskörper 20 ist gasdurchlässig und dient der Kühlung eines hindurchtretenden heißen oder warmen Gasstroms. Die Kühlwirkung kann auf seinem Wärmeaufnahmevermögen beruhen. Außerdem kann die Kühlung auf der Expansion des Gasstroms beruhen, wobei der Joule-Thomson-Effekt wirksam werden kann.

Der Druckentlastungskörper 20 ist in erster Linie ein Kühlkörper. Er muss nicht zwangsläufig flammendurchschlagsicher ausgebildet sein, denn der Hohlraum 16, wie auch vorzugsweise die anderen Hohlräume 17, 18, sind nach außen hin abgeschlossen. Alternativ können einer oder mehrere der Hohlräume 16, 17, 18 nach außen führende, mit flammendurchschlagsicheren Druckentlastungskörpern versehene Öffnungen aufweisen.

Eine Fortsetzung einer in dem Innenraum 11 stattfindenden Explosion in den Hohlraum 16 und/oder 17, 18 muss nicht zwingend ausgeschlossen werden. Deswegen kann der Druckentlastungskörper 20 an der Durchgangsöffnung 19 auch entfallen. Bei einer bevorzugten Ausführungsform ist der Druckentlastungskörper 20 jedoch nicht nur prinzipiell vorhanden, sondern darüber hinaus auch flammendurchschlagsicher ausgebildet, wodurch bei Zündung einer Explosion in dem Innenraum 11 eine Fortsetzung der Explosion in den Hohlraum 16 ausgeschlossen ist. Damit wirkt der Hohlraum 16 besonders effektiv als Drucksenke.

Die vorstehende Beschreibung des Hohlraums 16 der Durchgangsöffnung 19 und des Druckentlastungskörpers 20 gilt entsprechend für alle anderen Hohlräume 17, 18 der Gehäusewand 12 sowie entsprechend vorgesehene Durchgangsöffnungen 21 und Druckentlastungskörper 22.

Die Gehäusewand 12 weist eine Außenwand 23 und eine Innenwand 24 auf, zwischen denen Stegwände 25, 26 vorgesehen sein können. Die Stegwände 25, 26 können durchgehend ausgebildet sein und benachbarte Hohlräume 16, 17, 18 voneinander trennen oder auch Öffnungen freilassen oder aufweisen, die einen Druckausgleich zwischen benachbarten Hohlräumen 16, 17, 18 gestatten.

Die Stegwände 25, 26 können einstückiger Bestandteil der Gehäusewand 12 sein und somit aus dem gleichen Material wie die Außenwand 23 und die Innenwand 24 bestehen sowie nahtlos in diese übergehen. Beispielsweise kann die Gehäusewand 12 durch ein Aluminium-Strangpressprofil gebildet sein, das den Innenraum 11 dreiseitig umschließt, während Boden, Deckel und ein vorderer Wandabschnitt 27 durch daran befestigte, ein- oder ebenfalls mehrschalig aufgebaute, Hohlräume aufweisende Wände gebildet werden. Andere Bauformen sind möglich.

Das Gehäuse 10 kann nach außen geschlossen ausgebildet sein. Es ist jedoch auch möglich, es so auszubilden, dass die Gehäusewand 12 zum Beispiel an dem Wandabschnitt 27 eine oder mehrere Öffnungen 28, 29 aufweist, die jedoch einen flammendurchschlagsicheren Verschluss aufweisen. Dazu kann die Öffnung 28 mit einem Druckentlastungkörper 30 versehen sein, der beispielsweise als poröser gasdurchlässiger Körper ähnlich dem porösen Körper 20, 22 ausgebildet ist. Während die porösen Körper 20, 22 nicht zwingend flammendurchschlagsicher ausgebildet sein müssen, ist der Druckentlastungskörper 30 jedoch flammendurchschlagsicher. Seine Poren oder Spalten sind so eng und so lang, dass der Austritt von Flammen aus dem Innenraum 11 in die Umgebung sowie der Durchtritt glühender oder heißer Partikel zuverlässig ausgeschlossen ist.

Als weitere Öffnung 29 ist eine Durchführung einer Welle 31 lediglich beispielhaft veranschaulicht. Die Welle 31 oder ein sonstiges in der Öffnung 29 angeordnetes Element kann bewegt oder ruhend sein. Auch andere Durchführungen bewegter oder ruhender Teile können dementsprechend gestaltet sein. Jedenfalls ist ein an der Durchführung vorhandener Spalt so eng und lang, dass wiederum Flammendurchschlagsicherheit gegeben ist.

Das insoweit beschriebene Gehäuse 10 ist explosionssicher ausgebildet. Eine in dem Innenraum 11 gezündete Explosion eines entsprechenden Gasgemisches dringt über die gegebenenfalls vorhandenen Druckentlastungskörper 20, 22 oder auch über offengelassene Durchgangsöffnungen 19, 21 in die Hohlräume 16, 17, 18 ein, die in der Gehäusewand 12 ausgebildet sind. Sie erfahren dabei und an den Wänden der Hohlräume 16, 17, 18 eine schnelle Abkühlung, was zur Volumen- und damit Druckreduktion führt.

Der Kühleffekt kann gesteigert werden, indem die Außenwand 23 und/oder die Stegwände 25 mit Kühlrippen versehen sind, die in den jeweiligen Hohlraum 16, 17, 18 ragen. Jedenfalls aber ist das Verhältnis zwischen Oberfläche und Volumen der Hohlräume 16, 17, 18 bei allen Ausführungsformen vorzugsweise wesentlich größer als das Verhältnis von Oberfläche zu Volumen des Innenraums 11. Damit und durch die Wirkung der gegebenenfalls vorhandenen porösen Körper 20, 22 Gitter, Siebe oder dergleichen wird eine schnelle Abkühlung der durch die Explosion erwärmten Gase und somit eine erhebliche Druckreduktion erreicht. Die Gehäusewand 12 kann deswegen mit relativ dünner Wandstärke ausgebildet werden, wobei durch die Anordnung von Hohlräumen 16, 17, 18, d.h. Kammern in der Gehäusewand 12, eine hohe Gestaltfestigkeit der Gehäusewand erreicht wird. Zur weiteren Wandaussteifung und Kühlungsverbesserung können die Hohlräume mit Kühlstrukturen, z.B. Kühlrippen versehen sein, die nach innen ragen.

Figur 2 veranschaulicht eine abgewandelte, erfindungsgemäße Bauform des Gehäuses 10, zu dem zusätzlich zu der obigen Beschreibung ergänzend Folgendes gilt:
Die Außenwand 23 und/oder die Innenwand 24 des Gehäuses 10 sind mit Rippen, Sicken oder dergleichen versehen, deren Gipfel jeweils an Verbindungsstellen 32, 33 mit der jeweils anderen Wand verbunden sind. Die Verbindungsstellen 32, 33 können Schweißpunkte, Schweißnähte oder auf andere Weise erzeugte Verbindungsstellen sein. Insbesondere können die Außenwand 23 und die Innenwand 24 aus Blech, insbesondere Stahlblech ausgebildet sein. Die Verbindungsstellen 32, 33 können Laserschweißnähte oder auf anderem Wege mit oder ohne Zusatzwerkstoff hergestellte Schweißnähte sein. Die Außenwand 23 kann neben großen Sicken auch kleinere Rippen oder Sicken 34 aufweisen, die nach außen oder, wie in Figur 2 dargestellt, nach innen in einen jeweiligen Hohlraum 16 vorspringen. Die Sicken erhöhen die Gestaltfestigkeit der Außenwand 23. Ebenso können an der Innenwand 24 nicht weiter veranschaulichte Sicken vorgesehen sein.

Des Weiteren ist aus Figur 2 ersichtlich, dass zumindest einige der Hohlräume, zum Beispiel der Hohlraum 17, über eine oder mehrere Öffnungen mit dem Innenraum 11 verbunden sein können, wobei an dieser Öffnung kein kühlender und gegebenenfalls flammendurchschlagverhindernder poröser Körper angeordnet ist. Auch ist es möglich, einzelne Hohlräume, wie beispielsweise einen Hohlraum 17', von dem Innenraum 11 zu trennen, so dass das in dem Hohlraum 17' eingeschlossene Gasvolumen nicht mit dem Innenraum 11 kommuniziert. Noch immer dient der Hohlraum 17' jedoch zur Erhöhung der Gestaltfestigkeit der Gehäusewand 12 in diesem Bereich.

Eine weitere Variante des Gehäuses 10, nicht Teil der Erfindung, ist sehr schematisch in Figur 3 veranschaulicht. Die vorige Beschreibung gilt in allen Alternativen für die Ausführungsform nach Figur 3 entsprechend. Wie dargestellt, kann insbesondere auch der vordere Wandabschnitt 27 als mit einer oder mehreren Hohlräumen ausgebildetes, d.h. gekammertes Profil ausgebildet sein. Eine oder mehrere der Hohlräume 16, 17, 18 und/oder einer der Hohlräume 35 des Wandabschnitts 27 können mit einem Druckentlastungskörper 30 versehen sein, der eine in die Umgebung führende Öffnung flammendurchschlagsicher jedoch gasdurchlässig verschließt.

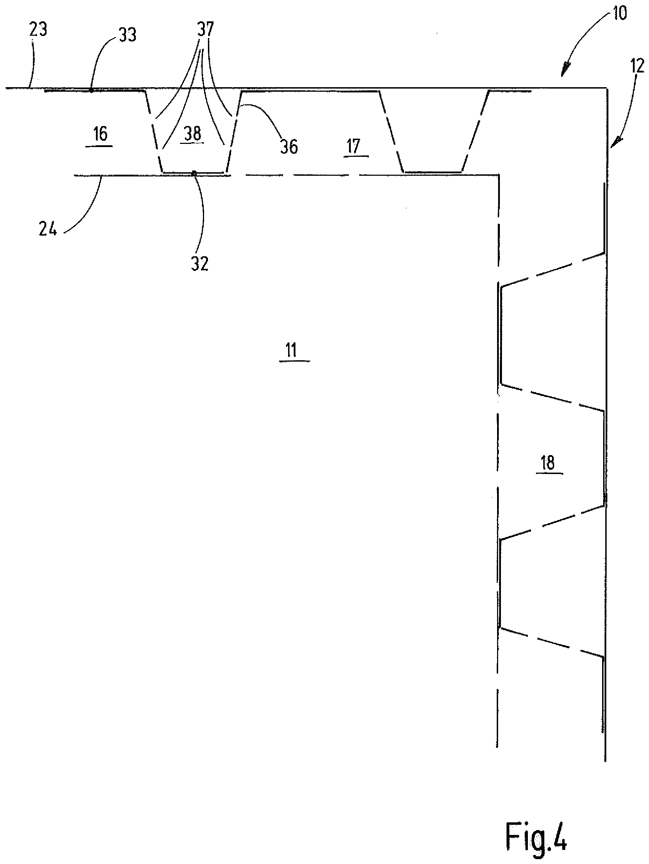

Die vorstehend beschriebenen Gehäuse 10, insbesondere das Gehäuse nach Figur 2, weisen einen zweischaligen Aufbau mit einer Außenwand 23 und einer Innenwand 24 auf, die durch Stegwände 25 oder durch Sicken miteinander direkt verbunden sind. Es ist jedoch auch ein mehrschaliger Aufbau möglich, wie er beispielshaft in Figur 4 veranschaulicht ist.

Für das Beispiel nach Figur 4 gilt die vorige Beschreibung entsprechend. Abwandelnd und ergänzend gilt, dass die Außenwand 23 und die Innenwand 24 durcheine Zwischenwand 36 miteinander verbunden sind, die gerippt, gewellt, genoppt oder anderweitig räumlich verformt ausgebildet sein kann, um einerseits die Außenwand 23 sowie andererseits die Innenwand 24 an dem einander zugewandten Seiten zu berühren. Wiederum dienen Verbindungsstellen 32, 33 beispielsweise in Gestalt von punktförmigen, linienhaften, streifenförmigen, ringförmigen oder sonstigen Schweißnähten zur festen Verbindung der Zwischenwand 36 mit der Außenwand 23 und der Innenwand 24. Die Innenwand 24 weist wiederum Durchgänge, d.h. Öffnungen auf, die den Innenraum 11 mit den zwischen der Außenwand 23 und der Innenwand 24 ausgebildeten Hohlräumen 16, 17, 18 verbinden. Weitere Durchgänge 37 in der Zwischenwand 36 schaffen Verbindungen zwischen den Hohlräumen 16, 17 sowie zu Kammern 38, die zwischen der Außenwand 23 und der Zwischenwand 36 ausgebildet sein können. Das Konzept nach Figur 4 führt zu leichten, bedarfsweise großvolumigen und explosionssicheren Gehäusen.

Die erfindungsgemäße Gehäuseanordnung 10 weist eine Gehäusewand 12 mit inneren Hohlräumen 16, 17, 18 auf, die einerseits zur Druckentlastung des Innenraums 11 und andererseits zur Erhöhung der Gestaltfestigkeit der Gehäusewand 12 beitragen. Derartige Gehäuse können großvolumig und dennoch leicht ausgebildet sein.

**Bezugszeichen:**

| | |
|---|---|
| 10 | Gehäuse |
| 11 | Innenraum des Gehäuses 10 |
| 12 | Gehäusewand |
| 13 - 15 | Komponenten |
| 16 | Hohlraum der Gehäusewand 12 |
| 17, 18 | weitere Hohlräume der Gehäusewand 12 |
| 19, 21 | Durchgangsöffnung in der Gehäusewand 12 |
| | |
| 20, 22 | poröser Körper |
| 23 | Außenwand |
| 24 | Innenwand |
| 25, 26 | Stegwände |
| 27 | Wandabschnitt |
| 28, 29 | Öffnungen |
| 30 | Druckentlastungskörper |
| 32, 33 | Verbindungsstellen |
| 34 | Sicken |
| 35 | Hohlraum |
| 36 | Zwischenwand |
| 37 | Durchgänge |
| 38 | Kammer |
| | |

## Patentansprüche

1. Explosionsgeschütztes Gehäuse (10), insbesondere Gehäuse der Schutzart ex-d,
wobei das Gehäuse (10), einen Innenraum (11) umschließt, der zur Aufnahme von Komponenten (13, 14, 15) geeignet ist, die Zündquellen bilden können, wobei das Gehäuse (10) wenigstens eine Gehäusewand (12) aufweist, in der wenigsten ein Hohlraum (16) ausgebildet ist,
mit einer Durchgangsöffnung (19), die den Hohlraum (17) mit dem Innenraum (16) verbindet,
**dadurch gekennzeichnet,**
**dass** die Gehäusewand (12) zwei- oder mehrschalig mit einer Außenwand (23) und einer Innenwand (24) aufgebaut ist, wobei die Außenwand (23) und/oder die Innenwand (24) des Gehäuses (10) mit Rippen, Sicken oder dergleichen versehen sind, deren Gipfel jeweils an Verbindungsstellen (32, 33) mit der jeweils anderen Wand verbunden sind, wobei die Verbindungsstellen (32, 33) Schweißpunkte oder Schweißnähte sind.

2. Gehäuse nach Anspruch 1, **dadurch gekennzeichnet, dass** in der Durchgangsöffnung (19) ein Druckentlastungskörper (20) angeordnet ist.

3. Gehäuse nach Anspruch 2, **dadurch gekennzeichnet, dass** der Druckentlastungskörper (20) ein Poren und/oder Spalten aufweisender gasdurchlässiger Körper ist.

4. Gehäuse nach Anspruch 2 oder 3, **dadurch gekennzeichnet, dass** der Druckentlastungskörper (20) ein Drahtnetz-Sinterkörper ist.

5. Gehäuse nach Anspruch 1, **dadurch gekennzeichnet, dass** die Innenwand (24) und die Außenwand (23) im Bereich ihrer Rippen miteinander verbunden sind.

6. Gehäuse nach einem der vorstehenden Ansprüche, **dadurch gekennzeichnet, dass** die Gehäusewand (12) Öffnungen (28) zur umgebenden Atmosphäre aufweist.

## Claims

1. Explosion-proof housing (10), in particular housing of protection class ex-d,
wherein the housing (10) surrounds an interior (11) which is suitable for receiving components (13, 14, 15) which may form ignition sources,
wherein the housing (10) comprises at least one housing wall (12) in which at least one cavity (16) is formed,
with a passage opening (19) which connects the cavity (17) to the interior (16), **characterised in that** the housing wall (12) is constructed as two or more shells with an outer wall (23) and an inner wall (24), wherein the outer wall (23) and/or the inner wall (24) of the housing (10) is provided with ribs, beads or similar, the tips of which are connected to the respective other wall at respective connecting points (32, 33), wherein the connecting points (32, 33) are weld points or weld seams.

2. Housing according to claim 1, **characterised in that** a pressure-relief body (20) is arranged in the passage opening (19).

3. Housing according to claim 2, **characterised in that** the pressure-relief body (20) is a gas-permeable body having pores and/or gaps.

4. Housing according to claim 2 or 3, **characterised in that** the pressure-relief body (20) is a wire-mesh sintered body.

5. Housing according to claim 1, **characterised in that** the inner wall (24) and the outer wall (23) are connected together in the region of their ribs.

6. Housing according to any of the preceding claims, **characterised in that** the housing wall (12) has openings (28) to the surrounding atmosphere.

## Revendications

1. Boîtier antidéflagrant (10), en particulier boîtier avec le mode de protection ex-d,
le boîtier (10) entourant un espace intérieur (11) qui est adapté pour accueillir des composants (13, 14, 15) pouvant constituer des sources d'inflammation,
le boîtier (10) présentant au moins une paroi de boîtier (12) dans laquelle est réalisée au moins une cavité (16),
comprenant une ouverture de passage (19) qui relie la cavité (17) à l'espace intérieur (16),
**caractérisé en ce que** la paroi de boîtier (12) est constituée de deux ou plusieurs coques comprenant une paroi extérieure (23) et une paroi intérieure (24), la paroi extérieure (23) et/ou la paroi intérieure (24) du boîtier (10) étant pourvues de nervures, de moulures ou d'éléments analogues, dont les sommets sont reliés respectivement à l'autre paroi à des emplacements de liaison (32, 33), lesdits emplacements de liaison (32, 33) étant des points de soudure ou des joints de soudure.

2. Boîtier selon la revendication 1, **caractérisé en ce qu'**un corps de décharge de pression (20) est disposé dans l'ouverture de passage (19).

3. Boîtier selon la revendication 2, **caractérisé en ce que** le corps de décharge de pression (20) est un corps perméable au gaz, présentant des pores et/ou des interstices.

4. Boîtier selon la revendication 2 ou 3, **caractérisé en ce que** le corps de décharge de pression (20) est un corps fritté à treillis métallique.

5. Boîtier selon la revendication 1, **caractérisé en ce que** la paroi intérieure (24) et la paroi extérieure (23) sont reliées l'une à l'autre dans la région de leurs nervures.

6. Boîtier selon l'une des revendications précédentes, **caractérisé en ce que** la paroi de boîtier (12) présente des ouvertures (28) vers l'atmosphère environnante.
